# EUROPÄISCHE PATENTANMELDUNG

(11) **EP 4 786 172 A1**
(43) Veröffentlichungstag der Anmeldung: **05.08.2026**
(21) Anmeldenummer: 26150568.9
(22) Anmeldetag: 07.01.2026
(51) Int. Cl.: B32B 27/08, B32B 27/12

(54) **KUNSTSTOFFVERBUNDPLATTE FÜR DEN BODENSCHUTZ**

(30) Priorität: 29.01.2025 DE 102025103198
(71) Anmelder: Huesker Synthetic GmbH, 48712 Gescher (DE); W8SVR GmbH, 48712 Gescher (DE)
(72) Erfinder: Detert, Oliver, 45473 Mülheim (DE); Neff, Leon, 46395 Bocholt (DE); Solzbacher, Barbara, 48282 Emsdetten (DE); Terhechte, Johannes, 48703 Stadtlohn (DE)
(74) Vertreter: Pelster Behrends Patentanwälte PartG mbB

(57) **Zusammenfassung**

Die Erfindung betrifft eine Kunststoffverbundplatte (10) für den Bodenschutz zum Verhindern von gewichtsbelastungsbedingten Bodenschäden, mit einer Kunststoffkernschicht (12), zumindest einer oberseitigen Faserverbundschicht (14b), welche oberhalb der Kunststoffkernschicht (12) angeordnet ist, zumindest einer oberseitigen Kunststoffschutzschicht (16b), welche oberhalb der oberseitigen Faserverbundschicht (14b) angeordnet ist, zumindest einer unterseitigen Faserverbundschicht (14a), welche unterhalb der Kunststoffkernschicht (12) angeordnet ist, und zumindest einer unterseitigen Kunststoffschutzschicht (16a), welche unterhalb der unterseitigen Faserverbundschicht (14a) angeordnet ist.

## Beschreibung

Die Erfindung betrifft eine Kunststoffverbundplatte für den Bodenschutz zum Verhindern von gewichtsbelastungsbedingten Bodenschäden, eine Plattenanordnung mit mehreren miteinander verbindbaren Kunststoffverbundplatten und ein Verfahren zum Herstellen einer Kunststoffverbundplatte.

Bei einer Vielzahl von Arbeiten ist es erforderlich, Bodenbereiche, beispielsweise Fahrwege oder Arbeitsbereiche- bzw. -flächen, vor gewichtsbelastungsbedingten Bodenschäden zu schützen. Derartige Bodenschäden können beispielsweise durch schwere Fahrzeuge, beispielsweise Baufahrzeuge, oder temporär abgestellte Lasten entstehen.

Die eingesetzten Schutzplatten können dabei beispielsweise bereits vorhandene Fahrwege schützen oder nicht tragfähige Bodenbereiche befahrbar machen. Da üblicherweise vergleichsweise hohe Lasten durch die eingesetzten Platten zu verteilen sind, werden im Stand der Technik regelmäßig Stahlplatten zum Bodenschutz eingesetzt. Die Stahlplatten werden üblicherweise mittels eines LKWs zum Einsatzort transportiert und dort im Bereich des zu schützenden Bodens ausgelegt. Aufgrund des hohen Gewichts der Stahlplatten ist der Transport sowie der Auf- und Abbau der Stahlplatten sehr aufwendig und ressourcenintensiv.

Die der Erfindung zugrunde liegende Aufgabe besteht also darin, den Aufwand und die aufzuwendenden Ressourcen für den Bodenschutz mittels Lastverteilplatten zu reduzieren.

Die Aufgabe wird gelöst durch eine Kunststoffverbundplatte der eingangs genannten Art, wobei die erfindungsgemäße Kunststoffverbundplatte eine Kunststoffkernschicht, zumindest eine oberseitige Faserverbundschicht, zumindest eine oberseitige Kunststoffschutzschicht, zumindest eine unterseitige Faserverbundschicht und zumindest eine unterseitige Kunststoffschutzschicht aufweist. Die zumindest eine oberseitige Faserverbundschicht ist oberhalb der Kunststoffkernschicht angeordnet. Die zumindest eine oberseitige Kunststoffschutzschicht ist oberhalb der oberseitigen Faserverbundschicht angeordnet. Die zumindest eine unterseitige Faserverbundschicht ist unterhalb der Kunststoffkernschicht angeordnet. Die zumindest eine unterseitige Kunststoffschutzschicht ist unterhalb der unterseitigen Faserverbundschicht angeordnet.

Die Kunststoffverbundplatte kann als Fahrwegplatte oder zum Erstellen von Arbeitsflächen eingesetzt werden. Die Kunststoffverbundplatte sorgt für eine Tragfähigkeitserhöhung und kann somit bei der Einrichtung von temporären Baustraßen oder zum Schutz existierender Straßenbereiche eingesetzt werden. Die Kunststoffverbundplatte dient zum Verteilen von Last zur Erhöhung der Tragfähigkeit des Untergrundes, sodass ein Untergrund mit einem beabsichtigten Fahrzeug befahrbar wird. Die Kunststoffverbundplatte verringert die Belastung des Bodens durch Reduzierung der Bodenpressung, da die Belastung auf eine größere Fläche verteilt wird. Der lokale Druck reduziert sich, wobei die durch die Fahrzeuge aufgebrachte Druckkraft aber die gleiche ist, wie beim Überfahren ohne Kunststoffverbundplatte. Die Kunststoffverbundplatte weist ein wesentlich geringeres Gewicht gegenüber einer Stahlplatte auf und ist somit besser transportierbar. Somit können auch deutlich mehr Kunststoffverbundplatten als Stahlplatten mit einem LKW transportiert werden, sodass der Transportaufwand erheblich reduziert wird. Insgesamt ergeben sich durch die Verwendung der erfindungsgemäßen Kunststoffverbundplatten auch geringere Unterhaltungskosten als bei Stahlplatten, da keine oder nur äußerst selten plastischen Verformungen auftreten. Verformte Stahlplatten müssen häufig aufwandsintensiv zurückgebogen werden. Außerdem haben die Kunststoffverbundplatten nach Erreichen des Lebensendes keinen Restwert mehr, sodass das Diebstahlrisiko im Vergleich zu Stahlplatten verringert ist. Die Kunststoffverbundplatte erlaubt den Transport einer Plattenfläche von 500 bis 1000 m² pro LKW, sodass die pro LKW transportierbare Plattenfläche ca. fünfmal größer ist als bei konventionellen Stahlplatten.

Der Lagenaufbau der Kunststoffverbundplatte kann unterhalb und oberhalb der Kunststoffkernschicht symmetrisch sein. Die oberseitige Kunststoffschutzschicht und die unterseitige Kunststoffschutzschicht können als Verschleißlage oder Opferschicht dienen. Ebenso kann die oberseitige und die unterseitige Kunststoffschicht genutzt werden, um eine Struktur oder Logo einzuprägen, fräsen oder anderweitig zu bearbeiten, um eine hinreichende Rauigkeit oder Personalisierung zu erzielen.

Die zumindest eine oberseitige Faserverbundschicht und/oder die zumindest eine unterseitige Faserverbundschicht umfasst neben Fasern vorzugsweise ein Matrix-Material, vorzugsweise einen Matrix-Kunststoff. Das Matrix-Material fixiert die Fasern und sorgt vorzugsweise auch für eine gute Verbindung zum Kunststoff. Das Matrix-Material kann auch als Füll- und/oder Klebstoff zwischen den Fasern dienen. Das Matrix-Material kann dem Kunststoffmaterial der Kunststoffkernschicht und/oder dem Kunststoffmaterial der oberseitigen Kunststoffschutzschicht und/oder den Kunststoffmaterial der unterseitigen Kunststoffschutzschicht entsprechen.

In einer bevorzugten Ausführungsform der erfindungsgemäßen Kunststoffverbundplatte weist die Kunststoffkernschicht eine größere Schichtstärke als die oberseitige Kunststoffschutzschicht und/oder die unterseitige Kunststoffschutzschicht auf. Die Kunststoffkernschicht kann eine Schichtstärke von zumindest 5 mm, vorzugsweise eine Schichtstärke von zumindest 8 mm, besonders bevorzugt eine Schichtstärke von zumindest 10 mm aufweisen. Die Kunststoffkernschicht kann eine Schichtstärke in einem Bereich zwischen 5 mm und 50 mm, bevorzugt eine Schichtstärke in einem Bereich zwischen 8 mm und 40 mm, besonders bevorzugt eine Schichtstärke in einem Bereich zwischen 10 mm und 30 mm aufweisen. Die oberseitige Kunststoffschutzschicht und/oder die unterseitige Kunststoffschutzschicht können eine Schichtstärke von 2 mm oder mehr aufweisen.

Die erfindungsgemäße Kunststoffverbundplatte wird ferner dadurch vorteilhaft weitergebildet, dass die Kunststoffkernschicht und/oder die zumindest eine oberseitige Kunststoffschutzschicht und/oder die zumindest eine unterseitige Kunststoffschutzschicht ein oder mehrere Virgin-Kunststoffe und/oder einen oder mehrere Rezyklat-Kunststoffe umfasst. Die Kunststoffverbundplatte kann somit umweltfreundlich hergestellt werden, sodass sich der Einsatzbereich auf die Anwendungen erweitert, bei denen eine gewisse Umweltfreundlichkeit erforderlich oder bevorzugt ist.

In einer weiteren bevorzugten Ausführungsform der erfindungsgemäßen Kunststoffverbundplatte ist die Kunststoffkernschicht und/oder die zumindest eine oberseitige Kunststoffschutzschicht und/oder die zumindest eine unterseitige Kunststoffschutzschicht aus einem Thermoplast ausgebildet. Der Thermoplast kann ein Polyolefin sein. Der Thermoplast kann ein Polyethylen sein, beispielsweise ein Polyethylen mit hoher Dichte (HDPE), wie etwa PE300, oder ein hochmolekulares Polyethylen (PE-HMW), wie etwa PE500, oder ein ultrahochmolekulares Polyethylen (PE-UHMW), insbesondere ein PE1000 sein oder ein Gemisch aus HDPE, HMW oder UHMW sein. Der Thermoplast kann ein Polypropylen sein. Der Thermoplast kann ein Polyester, beispielsweise ein Polyethylenterephthalat (PET), sein.

In einer weiteren bevorzugten Ausführungsform der erfindungsgemäßen Kunststoffverbundplatte ist die Kunststoffkernschicht und/oder die zumindest eine oberseitige Kunststoffschutzschicht und/oder die zumindest eine unterseitige Kunststoffschutzschicht als eine mahlgutbasierte und/oder schnittgutbasierte Kunststoffschmelzschicht ausgebildet. Das eingesetzte Mahlgut oder Schnittgut kann Pulver, Flocken, Flakes oder auch gröbere Stoffe umfassen. Alternativ oder zusätzlich ist die Kunststoffkernschicht und/oder die zumindest eine oberseitige Kunststoffschutzschicht und/oder die zumindest eine unterseitige Kunststoffschutzschicht als agglomeratbasierte Kunststoffschmelzschicht ausgebildet. Alternativ oder zusätzlich ist die Kunststoffkernschicht und/oder die zumindest eine oberseitige Kunststoffschutzschicht und/oder die zumindest eine unterseitige Kunststoffschutzschicht als granulatbasierte Kunststoffschmelzschicht ausgebildet.

Es ist darüber hinaus eine erfindungsgemäße Kunststoffverbundplatte vorteilhaft, bei welcher in die Kunststoffkernschicht und/oder die zumindest eine oberseitige Kunststoffschutzschicht und/oder die zumindest eine unterseitige Kunststoffschutzschicht Fasern eingebettet sind. Die eingebetteten Fasern sorgen für eine höhere Festigkeit und Stabilität der Kunststoffschichten, sodass die Belastbarkeit der Kunststoffverbundplatte weiter gesteigert wird.

Es ist darüber hinaus eine erfindungsgemäße Kunststoffverbundplatte vorteilhaft, bei welcher die in die Kunststoffkernschicht eingebetteten Fasern und/oder die in die zumindest eine oberseitige Kunststoffschutzschicht eingebetteten Fasern und/oder die in die zumindest eine unterseitige Kunststoffschutzschicht eingebetteten Fasern Einzelfasern, insbesondere eingestreute Einzelfasern, sind oder eine Fasermatte bilden. Die eingebetteten Fasern können durch ein vorgemischtes Kunststoff-Fasergemisch eingebracht werden. Die eingebetteten Fasern können durch eine gesonderte Fasereinstreuung eingebracht werden. Die eingebetteten Fasern können als Fasermatte, beispielsweise als Flor, Vlies oder verfestigter Vliesstoff, eingebracht werden. Durch das Einbringen von Fasern in eine oder beide Kunststoffschutzschichten kann eine Materialschrumpfung während der Herstellungsprozesses reduziert oder ganz verhindert werden. Eine Materialschrumpfung ist im Herstellungsprozess nicht erwünscht. Eine Materialschrumpfung, insbesondere eine unterschiedliche Materialschrumpfung der Schichten, kann zu einem Verzug der Kunststoffverbundplatte oder zu einem Ablösen der einzelnen Schichten führen. Die schrumpfarme Kunststoffverbundplatte weist einen besseren Lagenverbund auf und weist dadurch eine deutlich erhöhte Festigkeit auf.

In einer anderen bevorzugten Ausführungsform der erfindungsgemäßen Kunststoffverbundplatte umfassen die in die Kunststoffkernschicht eingebetteten Fasern und/oder die in die zumindest eine oberseitige Kunststoffschutzschicht eingebetteten Fasern und/oder die in die zumindest eine unterseitige Kunststoffschutzschicht eingebetteten Fasern mineralische Fasern und/oder Kunstfasern und/oder Karbonfasern und/oder Naturfasern. Die mineralischen Fasern können Glasfasern und/oder Basaltfasern umfassen. Die Kunstfasern können Aramidfasern umfassen. Die Naturfasern können Flachsfasern und/oder Hanffasern und/oder Sisalfasern und/oder Jutefasern und/oder Kokosfasern umfassen.

In einer weiteren Ausführungsform der erfindungsgemäßen Kunststoffverbundplatte sind in die Kunststoffkernschicht und/oder in die zumindest eine oberseitige Kunststoffschutzschicht und/oder in die zumindest eine unterseitige Kunststoffschutzschicht ein oder mehrere Füllstoffe eingebracht. Es können ein oder mehrere mineralische Füllstoffe, wie Calciumcarbonat, Sand, Aluminiumhydroxid, Talkum, Glasbruch, Glaskugeln und/oder Glasfasern, eingebracht sein. Es können ein oder mehrere polymere Füllstoffe eingebracht sein. Es können ein oder mehrere natürliche oder organische Füllstoffe, wie Naturfasern, beispielsweise Hanffasern, Flachsfasern und/oder Ruße eingebracht sein. Der eine oder die mehreren Füllstoffe können unverfestigt, also beispielsweise als lose Fasern, oder als Faserflor oder Vlies eingebracht sein. Der eine oder die mehreren Füllstoffe können als verfestigte Vliesstoffe, beispielsweise als thermisch verfestigte und/oder mechanisch verfestigte und/oder chemisch verfestigte Vliesstoffe, eingebracht sein. Der eine oder die mehreren Füllstoffe können als Gewebe, Gelege, Gewirke oder Gitter eingebracht sein.

Es ist ferner eine erfindungsgemäße Kunststoffverbundplatte bevorzugt, bei welcher die zumindest eine oberseitige Faserverbundschicht und/oder die zumindest eine unterseitige Faserverbundschicht nur eine oder mehrere Textillagen umfassen. Die zumindest eine oberseitige Faserverbundschicht und/oder die zumindest eine unterseitige Faserverbundschicht kann zwei bis zehn Textillagen, bevorzugt zwei bis acht Textillagen, besonders bevorzugt zwei bis sechs Textillagen aufweisen. Die zumindest eine oberseitige Faserverbundschicht und/oder die zumindest eine unterseitige Faserverbundschicht kann Einzelfasern und/oder Faserfetzen und/oder Fasermattenstücke umfassen. Wenn die zumindest eine oberseitige Faserverbundschicht oder die zumindest eine unterseitige Faserverbundschicht mehrere Textillagen umfassen, können die Fasern der jeweiligen Textillagen unterschiedliche Orientierungsrichtungen zueinander aufweisen. Beispielsweise unterscheiden sich die Orientierungsrichtungen der Fasern der jeweiligen Textillagen um 90 Grad oder um 45 Grad oder um 30 Grad oder um einen anderen Orientierungsdifferenzwinkel zwischen 15 Grad und 280 Grad voneinander.

Es ist darüber hinaus eine erfindungsgemäße Kunststoffverbundplatte vorteilhaft, bei welcher die zumindest eine oberseitige Faserverbundschicht und/oder die zumindest eine unterseitige Faserverbundschicht mineralische Fasern und/oder Kunstfasern und/oder Karbonfasern umfasst. Die mineralischen Fasern können Glasfasern und/oder Basaltfasern umfassen. Die Kunstfasern können Aramidfasern sein. Die Kunststoffverbundplatte kann eine Fahrwegplatte mit Glasfaserverstärkung und Opferschicht sein. Durch die Faserverstärkung kann die Materialstärke bei gleichbleibender Belastbarkeit reduziert werden, sodass die Kunststoffverbundplatte ein geringeres Gewicht im Vergleich zu konventionellen PE-Platten aufweist. Die durch die Faserverstärkung erreichte Steifigkeit ermöglicht eine optimale Überfahrbarkeit von weichen Böden. Die Last von Fahrzeugreifen wird durch die Platte auf eine größere Fläche verteilt. Je nach Anforderung kann die Platte im Aufbau auch modifiziert werden, um größere Lasten auszuhalten.

Es ist darüber hinaus eine erfindungsgemäße Kunststoffverbundplatte bevorzugt, bei welcher die zumindest eine oberseitige Faserverbundschicht und/oder die zumindest eine unterseitige Faserverbundschicht Fasern aufweisen, welche als Schar vorliegen oder einen textilen Flächenverbund bilden. Wenn die Fasern als Schar vorliegen, sind die Fasern nebeneinander liegend orientiert. Die Fasern können insbesondere in Form von Geweben, Gelegen, Gewirken, Gittern, einer Fadenschar oder ähnlichen Strukturen vorliegen. Die Fasern können insbesondere als Gewebe in einer Leinwand mit 1/1-Bindung vorliegen. Die Gewirke können Glasfasergewirke sein, welche beispielsweise über eine Vernähung mittels Binde- oder Nähfaden- typischerweise Trikot, Franse oder Tuch oder eine Kombination aus vorgenannten Stichtypen, verbunden sind. Der textile Flächenverbund kann offen oder geschlossen sein. Bei einem offenen textilen Flächenverbund kann bei der Herstellung der Kunststoffverbundplatte der fließfähige Kunststoff durch den textilen Flächenverbund hindurchfließen, sodass eine feste und belastbare Verbindung erzeugt wird.

Die erfindungsgemäße Kunststoffverbundplatte wird ferner dadurch vorteilhaft weitergebildet, dass die zumindest eine oberseitige Faserverbundschicht und/oder die zumindest eine unterseitige Faserverbundschicht unidirektional und/oder multidirektional orientierte Fasern aufweisen. Die zumindest eine oberseitige Faserverbundschicht und/oder die zumindest eine unterseitige Faserverbundschicht kann beispielsweise durch eine unidirektionale Fasermatte gebildet werden. Alternativ können die Fasern der zumindest einen oberseitigen Faserverbundschicht und/oder der zumindest einen unterseitigen Faserverbundschicht wie bei einem Gewebe oder Gewirke rechtwinklig gekreuzt vorliegen.

Es ist ferner eine erfindungsgemäße Kunststoffverbundplatte bevorzugt, bei welcher die zumindest eine oberseitige Faserverbundschicht und/oder die zumindest eine unterseitige Faserverbundschicht imprägnierte Fasern umfassen. Die Imprägnierung kann vorwiegend aus dem Kunststoff der Kunststoffkernschicht und/oder der zumindest einen oberseitigen Kunststoffschutzschicht und/oder der zumindest einen unterseitigen Kunststoffschutzschicht oder einem hierzu kompatiblen Kunststoff ausgebildet sein. Die Fasern können unmittelbar imprägniert sein. Die Imprägnierung kann eine Vorimprägnierung sein. Alternativ oder zusätzlich kann während der Herstellung der Kunststoffverbundplatte eine Fadenschar und/oder eine textile Fläche gebildet werden, wobei die Fadenschar und/oder die textile Fläche dann im Anschluss imprägniert wird.

In einer weiteren bevorzugten Ausführungsform der erfindungsgemäßen Kunststoffverbundplatte umfassen die zumindest eine oberseitige Faserverbundschicht und/oder die zumindest eine unterseitige Faserverbundschicht eine oder mehrere Gewebelagen und/oder eine oder mehrere Gewirkelagen. Das Gewebe oder Gewirke der einen oder der mehreren Gewebe- und/oder Gewirkelagen kann aus thermoplastischen, gespreizten, mit Thermoplast überzogenen Glasfasern hergestellt sein. Weiterhin kann die eine oder die mehreren Gewebe- und/oder Gewirkelagen durch ein Prepreg, insbesondere ein Prepreg-Gewebe bzw. Prepreg-Gewirk oder bepulvertem Gewebe bzw. Gewirk gebildet werden.

In einer weiteren bevorzugten Ausführungsform der erfindungsgemäßen Kunststoffverbundplatte weisen die zumindest eine oberseitige Faserverbundschicht und/oder die zumindest eine unterseitige Faserverbundschicht ein oder mehrere faserverstärkte Bänder auf. Die Bänder können auch als Tapes bezeichnet werden, sodass die Fasern folglich ein oder mehrere Fasertapes bilden. Die Fasertapes bestehen vorzugsweise aus Fasern, insbesondere Endlosfasern, die in einer parallelen Ausrichtung zueinander flach ausgelegt und vorzugsweise vorimprägniert sind. "Endlos" bedeutet in diesem Zusammenhang, dass die Fasern im Garn nur einen Anfang und ein Ende haben und keine Unterbrechungen im Garn aufweisen, wie dies bei Stapelfasern der Fall ist. Garne aus Endlosfasern sind beispielsweise Glasfaserrovings, Filamentgarne, insbesondere Monofilamentgarne oder Multifilamentgarne, Bändchen oder Spleißgane oder Tapes aus mehreren flach ausgelegten (endlosen) Filamenten. Die Fasertapes können beispielsweise ein oder mehrere Gewebe, ein oder mehrere Gewirke, ein oder mehrere Gelege und/oder ein oder mehrere Gitter bilden. Die Fasertapes können insbesondere ein Gewebe in einer Leinwand mit einer 1/1-Bindung bilden. Mehrere faserverstärkte Bänder können eine Bänderanordnung bilden. Die Bänderanordnung kann offen oder geschlossen sein. Eine offene Bänderanordnung ermöglicht bei der Herstellung der Kunststoffverbundplatte, dass der fließfähige Kunststoff durch die Bänderanordnung hindurchfließen kann und so eine feste Verbindung eingeht. Die Bänderanordnung kann beispielsweise ein Gewebe, ein Gewirke, ein Gelege und/oder ein Gitter sein oder umfassen. Die Bänderanordnung kann beispielsweise ein Glasfasertape-Gewebe, Glasfasertape-Gewirke, ein Glasfasertape-Gelege oder ein Glasfasertape-Gitter sein.

In einer weiteren bevorzugten Ausführungsform der Kunststoffverbundplatte umfasst die zumindest eine oberseitige Kunststoffschutzschicht und/oder die zumindest eine unterseitige Kunststoffschutzschicht ein Gemisch aus Kunststoff und eingestreuten Glasfasern oder Hohlglaskugeln.

In einer weiteren Ausführungsform der erfindungsgemäßen Kunststoffverbundplatte ist die Außenseite der zumindest einen oberseitigen Kunststoffschutzschicht und/oder die Außenseite der zumindest einen unterseitigen Kunststoffschutzschicht thermisch, mechanisch und/oder chemisch bearbeitet. Beispielsweise ist die Außenseite der zumindest einen unterseitigen Kunststoffschutzschicht und/oder die Außenseite der zumindest einen oberseitigen Kunststoffschutzschicht angeraut und/oder spanend bearbeitet. Eine thermische Bearbeitung kann eine Kalandrierung oder Prägung beinhalten. Die spanende Bearbeitung kann Fräsen, Hobeln, Schleifen oder Bürsten umfassen. Die Oberfläche kann durch Einpressen nachbearbeitet sein. Die Nachbearbeitung kann beispielsweise eingesetzt werden, um eine bessere Überfahrbarkeit durch eine erhöhte Reibung zwischen der Kunststoffverbundplatte und einem Fahrzeug zu ermöglichen. Alternativ zu der angerauten und/oder thermisch oder spanend bearbeiteten Oberfläche kann eine zusätzliche reibungsverändernde Schicht angebracht sein. Insbesondere kann eine reibungsverändernde Schicht eine Beschichtung umfassen. Die Oberfläche sorgt für eine Reduzierung der Rutschgefahr und eine Erhöhung der Reibung. Ferner kann Sand oder Splitt auf die Oberfläche eingestreut und dann verpresst sein. Die eingestreuten Glasfasern können eine Länge zwischen 2 und 75 mm aufweisen.

In einer weiteren Ausführungsform der erfindungsgemäßen Kunststoffverbundplatte weist die Außenseite der zumindest einen oberseitigen Kunststoffschutzschicht und/oder die Außenseite der zumindest einen unterseitigen Kunststoffschutzschicht eine rippenartige und/oder Linienstruktur und/oder noppenartige und/oder gitterartige Struktur auf. Insbesondere kann die Oberfläche eine diagonal gerippte Struktur aufweisen, bei denen sogenannte Riffel, Raupen oder Tränen, die rippenförmige Erhöhungen/Vertiefung umfassen, aus der Oberfläche hervorstehen. Die Anordnung der Riffel kann diagonal versetzt zueinander sein. Es können auch mehrere Riffeln parallel zueinander angeordnet sein und somit eine sogenannte Riffelung ergeben. Die Oberfläche kann geschnitten sein. Auf der Oberfläche können Aufbringungen vorhanden sein, beispielsweise aufgeklebte und/oder aufgeschweißte Aufbringungen.

Es ist darüber hinaus eine erfindungsgemäße Kunststoffverbundplatte bevorzugt, bei welcher die Verstärkungsfasern der faserverstärkten Bänder eine unidirektionale Faserausrichtung aufweisen. Die faserverstärkten Bänder sind also sogenannte unidirektionale Tapes (UD-Tapes). Die Verstärkungsfasern der faserverstärkten Bänder weisen vorzugsweise eine gerade und verdrehungsfreie Faserorientierung auf, sodass die Kraftaufnahme im Bauteil weiter optimiert wird.

Die erfindungsgemäße Kunststoffverbundplatte wird ferner dadurch vorteilhaft weitergebildet, dass die faserverstärkten Bänder der zumindest einen oberseitigen Faserverbundschicht und/oder der zumindest einen unterseitigen Faserverbundschicht ein Bandgewebe bilden. Das Bandgewebe umfasst mehrere miteinander verwebte faserverstärkte Bänder. Die Verstärkungsfasern einer ersten Gruppe von Bändern erstreckt sich vorzugsweise in eine erste Richtung. Die Verstärkungsfasern einer zweiten Gruppe von Bändern erstreckt sich vorzugsweise in eine zweite Richtung. Die erste und die zweite Richtung unterscheiden sich voneinander und verlaufen insbesondere rechtwinklig zueinander. Die faserverstärkten Bänder können auch eine Leinwandbindung bilden.

Die erfindungsgemäße Kunststoffverbundplatte wird ferner dadurch vorteilhaft weitergebildet, dass sich im Randbereich der Kunststoffverbundplatte ein außenseitiger, faserfreier Materialstreifen befindet. Der außenseitige faserfreie Materialstreifen kann eine Breite im Bereich von 5 mm bis 200 mm aufweisen, vorzugsweise eine Breite in einem Bereich zwischen 5 mm und 100 mm aufweisen. Durch den außenseitigen faserfreien Materialstreifen treten im Randbereich keine Fasern aus der Kunststoffverbundplatte aus, auch nicht, wenn das Material während der Herstellung schrumpft. Außerdem lässt sich der außenseitige faserfreie Materialstreifen spanend bearbeiten, sodass im Randbereich beispielsweise eine spanend bearbeitete Plattenkante, beispielsweise eine angefaste Plattenkante, vorhanden sein kann.

In einer anderen bevorzugten Ausführungsform der erfindungsgemäßen Kunststoffverbundplatte befindet sich in einem vom Plattenrand entfernten Bereich der Kunststoffverbundplatte ein faserfreier Materialstreifen. Durch den vom Plattenrand entfernt angeordneten faserfreien Materialstreifen sind die Faserverbundschichten unterbrochen. Durch den vom Plattenrand entfernt angeordneten faserfreien Materialstreifen wird eine gezielte Verformbarkeit der Kunststoffverbundplatte und so eine höhere Plattenflexibilität ermöglicht. Die Faserverbundschichten der Kunststoffverbundplatte können in mehreren Bereichen unterbrochen sein. Die unterbrochenen Bereiche der zumindest einen oberseitigen Faserverbundschicht und der zumindest einen unterseitigen Faserverbundschicht können versetzt sein oder sich in Deckung befinden.

Die der Erfindung zugrunde liegende Aufgabe wird ferner durch eine Plattenanordnung der eingangs genannten Art gelöst, wobei die Kunststoffverbundplatten der erfindungsgemäßen Plattenanordnung nach einer der vorstehend beschriebenen Ausführungsformen ausgebildet sind. Hinsichtlich der Vorteile und Modifikationen der erfindungsgemäßen Plattenanordnung wird somit zunächst auf die Vorteile und Modifikationen der erfindungsgemäßen Kunststoffverbundplatte verwiesen.

Die mehreren Kunststoffverbundplatten der erfindungsgemäßen Plattenanordnung können direkt, also ohne separates Verbindungselement, miteinander verbindbar sein. Alternativ können die mehreren Kunststoffverbundplatten unter Verwendung eines Verbindungselements miteinander verbindbar sein. Die mehreren Kunststoffverbundplatten sind vorzugsweise formschlüssig und/oder kraftschlüssig miteinander verbindbar. Miteinander verbundene Kunststoffverbundplatten sind in einem höheren Maß als Einzelplatten gegen Verschieben und Verrutschen gesichert.

In einer bevorzugten Ausführungsform der erfindungsgemäßen Plattenanordnung sind die mehreren Kunststoffverbundplatten durch Stecken miteinander verbindbar und bilden ein Stecksystem. Vorzugsweise weisen die Kunststoffverbundplatten im Randbereich oder im Kantenbereich eine Steckkonturierung auf, über welche die Kunststoffverbundplatten zusammengesteckt werden können. Wenn die Kunststoffverbundplatten über ein separates Verbindungselement miteinander verbindbar sind, kann das Verbindungselement ein Steckelement sein, über welches zwei oder mehr als zwei Kunststoffverbundplatten zusammengesteckt werden können.

In einer weiteren bevorzugten Ausführungsform der erfindungsgemäßen Plattenanordnung sind mehrere Kunststoffverbundplatten durch Verschrauben miteinander verbindbar. Dabei können mehrere Kunststoffverbundplatten durch eine oder mehrere Schrauben direkt oder durch eine Schraubenmutterverbindung miteinander verschraubt sein. Alternativ können die Kunststoffverbundplatten durch Verschrauben an ein Verbindungselement miteinander verbunden werden. Das Verbindungselement kann ein gegenüber der Kunststoffverbundplatte biegesteifes Element, wie z.B. ein Stahlteil oder ein gegenüber der Kunststoffverbundplatte nachgiebiges Element, wie z.B. ein Kunststoffteil, insbesondere ein Spritzgussteil oder ein Textil sein.

Die der Erfindung zugrunde liegende Aufgabe wird ferner durch ein Verfahren zum Herstellen einer Kunststoffverbundplatte nach einer der vorstehend beschriebenen Ausführungsformen gelöst, wobei das Herstellen der Kunststoffverbundplatte in einem Pressverfahren oder in einem Extrusionsverfahren erfolgt. Hinsichtlich der Vorteile und Modifikationen des erfindungsgemäßen Verfahrens wird zunächst auf die Vorteile und Modifikationen der erfindungsgemäßen Kunststoffverbundplatte verwiesen.

In einer bevorzugten Ausführungsform des erfindungsgemäßen Verfahrens wird in dem Pressverfahren eine Sinterpresse oder eine Bandpresse eingesetzt. Mit Sinterpressen lassen sich unter Druck und Temperatur aus pulverförmigen Ausgangsmaterialien feste Bauteile herstellen. Die einzelnen Pulverteile verbinden sich zu einem festen Material. Die Bandpresse kann eine Doppelbandpresse sein. Mit einer Doppelbandpresse ist die kontinuierliche Herstellung von Kunststoffverbundplatten möglich. Die Doppelbandpresse kann eine isobare Doppelbandpresse, eine isochore Doppelbandpresse oder eine kombinierte isobare/isochore Doppelbandpresse sein. Die isobare Doppelbandpresse arbeitet mit einem Druckmedium, das jeweils in einer Druckkammer zwischen einer Druckplatte und einem Pressband gehalten wird und bietet eine gleichmäßige Druckverteilung. Bei der isochoren Doppelbandpresse wird der Druck mechanisch über Rollen auf die Pressbänder übertragen.

In einer bevorzugten Ausführungsform des erfindungsgemäßen Verfahrens werden bei Verwendung einer Sinterpresse ein oder mehrere der folgenden Schritte ausgeführt: Einbringen von Kunststoffmaterial für die zumindest eine unterseitige Kunststoffschutzschicht in einen Werkstückträger, Einbringen von Fasermaterial für die zumindest eine unterseitige Faserverbundschicht in den Werkstückträger, Einbringen von Kunststoffmaterial für die Kunststoffkernschicht in den Werkstückträger, Einbringen von Fasermaterial für die zumindest eine oberseitige Faserverbundschicht in den Werkstückträger, Einbringen von Kunststoffmaterial für die zumindest eine oberseitige Kunststoffschutzschicht in den Werkstückträger, Verpressen des eingebrachten Kunststoffmaterials und/oder des eingebrachten Fasermaterials mittels eines Druckstempels, Erwärmen des gepressten Kunststoffmaterials, insbesondere zum Aufschmelzen des Kunststoffmaterials.

Bei der Herstellung der Kunststoffverbundplatte wird vorzugsweise abwechselnd Kunststoffmaterial und Fasermaterial in den Werkstückträger eingebracht. Der Werkstückträger kann eine Schalung sein. Das eingebrachte Kunststoffmaterial kann faserfrei sein oder Fasern, beispielsweise Glasfasern, umfassen, also ein Kunststoff-Fasergemisch sein. Alternativ kann das eingebrachte Kunststoffmaterial ein Kunststoff-Füllstoff-Gemisch sein. Nach Einbringen des Kunststoffmaterials kann das Kunststoffmaterial abgerakelt oder auf andere Weise vergleichmäßigt werden. Das Einbringen des Fasermaterials kann durch Einlegen von Faserlagen erfolgen. Der Druckstempel übt vorzugsweise einen konstanten Druck über die gesamte Fläche der späteren Kunststoffverbundplatte aus. Zum Erwärmen des verpressten Kunststoffmaterials wird vorzugsweise eine vorgegebene Temperatur eingestellt. Vorzugsweise wird die Temperatur eines Wärmeüberträgers eingestellt, z.B. ein Medium, das zum Beheizen der Heizelemente eingebracht wird. Die Vorlauftemperatur kann somit über der Schmelztemperatur des Kunststoffs liegen, beispielsweise etwa 30 bis 70 °C über der Schmelztemperatur des Kunststoffs. Nach dem Aufschmelzen des Kunststoffmaterials erfolgt zunächst ein Abkühlen, bevor der Werkstückträger aus der Sinterpresse entnommen und die Kunststoffverbundplatte aus dem Werkstückträger gelöst wird.

In einer weiteren bevorzugten Ausführungsform des erfindungsgemäßen Verfahrens werden bei Verwendung einer Bandpresse ein oder mehrere der folgenden Schritte ausgeführt: Positionieren eines Kunststoffmaterial und Fasermaterial umfassenden Plattenrohlings zwischen Pressbändern der Bandpresse, Verpressen des Plattenrohlings zwischen den Pressbändern der Bandpresse, Erwärmen des Plattenrohlings zwischen den Pressbändern der Bandpresse, insbesondere zum Aufschmelzen des Kunststoffmaterials, kontrolliertes Abkühlen des Plattenrohlings, insbesondere zwischen den Pressbändern der Bandpresse, nach dem Aufschmelzen des Kunststoffmaterials. Das Erwärmen des Plattenrohlings und das Verpressen des Plattenrohlings kann gleichzeitig erfolgen.

Die Herstellung der Kunststoffverbundplatte kann ferner in einem Extrusionsverfahren erfolgen. Bei einer diskontinuierlichen Herstellung erfolgt eine Extrusion der Platte durch Drücken der Kunststoffschmelze in eine vorgefertigte Werkzeugform. Das Fasermaterial kann vor dem Gießvorgang in die Form eingebracht, beispielsweise eingelegt, und von der Kunststoffschmelze umschlossen werden. Bei einer kontinuierlichen Herstellung erfolgt die Extrusion der Kunststoffschmelze aus einer Breitschlitzdüse. In diesem Fall kann das Fasermaterial im weichen Zustand gepresst werden. Die Kunststoffverbundplatte wird dann aus dem abgekühlten, kontinuierlich extrudierten Kunststoffverbund, geschnitten.

Nachfolgend werden bevorzugte Ausführungsformen der Erfindung unter Bezugnahme auf die beiliegenden Zeichnungen näher erläutert und beschrieben. Dabei zeigen:
- Fig. 1: eine erfindungsgemäße Kunststoffverbundplatte in einer schematischen Schnittdarstellung;
- Fig. 2: eine Textillage einer erfindungsgemäßen Kunststoffverbundplatte in einer schematischen Perspektivdarstellung;
- Fig. 3: eine erfindungsgemäße Kunststoffverbundplatte mit jeweils eine Textillage aufweisenden Faserverbundschichten in einer schematischen Schnittdarstellung;
- Fig. 4: eine erfindungsgemäße Kunststoffverbundplatte mit jeweils drei Textillagen aufweisenden Faserverbundschichten in einer schematischen Schnittdarstellung;
- Fig. 5: eine weitere erfindungsgemäße Kunststoffverbundplatte in einer schematischen Schnittdarstellung sowie die Orientierungen der Fasern der Textillagen;
- Fig. 6: eine erfindungsgemäße Kunststoffverbundplatte mit jeweils drei Textillagen aufweisenden Faserverbundschichten und Fasern umfassenden Kunststoffschutzschichten in einer schematischen Schnittdarstellung;
- Fig. 7: eine erfindungsgemäße Kunststoffverbundplatte mit jeweils drei Textillagen aufweisenden Faserverbundschichten und einer Fasern umfassenden Kunststoffkernschicht in einer schematischen Schnittdarstellung;
- Fig. 8: eine erfindungsgemäße Kunststoffverbundplatte mit jeweils drei Textillagen aufweisenden Faserverbundschichten und einen Füllstoff umfassenden Kunststoffschichten in einer schematischen Schnittdarstellung;
- Fig. 9: eine erfindungsgemäße Kunststoffverbundplatte mit jeweils drei Textillagen aufweisenden Faserverbundschichten und einer Füllstoff umfassenden Kunststoffkernschicht in einer schematischen Schnittdarstellung;
- Fig. 10: eine weitere erfindungsgemäße Kunststoffverbundplatte in einer schematischen Draufsicht;
- Fig. 11: den Werkstückträger einer Sinterpresse zu Beginn der Herstellung einer Kunststoffverbundplatte in einer schematischen Darstellung;
- Fig. 12: den in der Fig. 11 dargestellten Werkstückträger während des Einbringens von Kunststoffmaterial in einer schematischen Darstellung;
- Fig. 13: den in der Fig. 12 dargestellten Werkstückträger während des Einbringens von Fasermaterial in einer schematischen Darstellung;
- Fig. 14: den in der Fig. 13 dargestellten Werkstückträger während der Vergleichmäßigung des eingebrachten Kunststoffmaterials in einer schematischen Darstellung;
- Fig. 15: den in der Fig. 14 dargestellten Werkstückträger während des Verpressens des vergleichmäßigten Kunststoffmaterials in einer schematischen Darstellung;
- Fig. 16: den in der Fig. 15 dargestellten Werkstückträger mit vergleichmäßigtem und verpresstem Kunststoffmaterial in einer schematischen Darstellung;
- Fig. 17: den in der Fig. 16 dargestellten Werkstückträger nach dem Einbringen einer Textillage in einer schematischen Darstellung;
- Fig. 18: den in der Fig. 17 dargestellten Werkstückträger nach dem Einbringen weiterer Textillagen und weiteren Kunststoffmaterials in einer schematischen Darstellung;
- Fig. 19: den in der Fig. 11 dargestellten Werkstückträger während des Einbringens eines Kunststoff-Faser-Gemisches in einer schematischen Darstellung;
- Fig. 20: den in der Fig. 19 dargestellten Werkstückträger während der Vergleichmäßigung des eingebrachten Kunststoff-Faser-Gemisches in einer schematischen Darstellung;
- Fig. 21: den in der Fig. 20 dargestellten Werkstückträger während des Verpressens des vergleichmäßigten Kunststoff-Faser-Gemisches in einer schematischen Darstellung;
- Fig. 22: eine Bandpresse zum Herstellen einer erfindungsgemäßen Kunststoffverbundplatte in einer schematischen Darstellung; und
- Fig. 23: eine weitere Presse zum Herstellen einer erfindungsgemäßen Kunststoffverbundplatte in einer schematischen Darstellung.

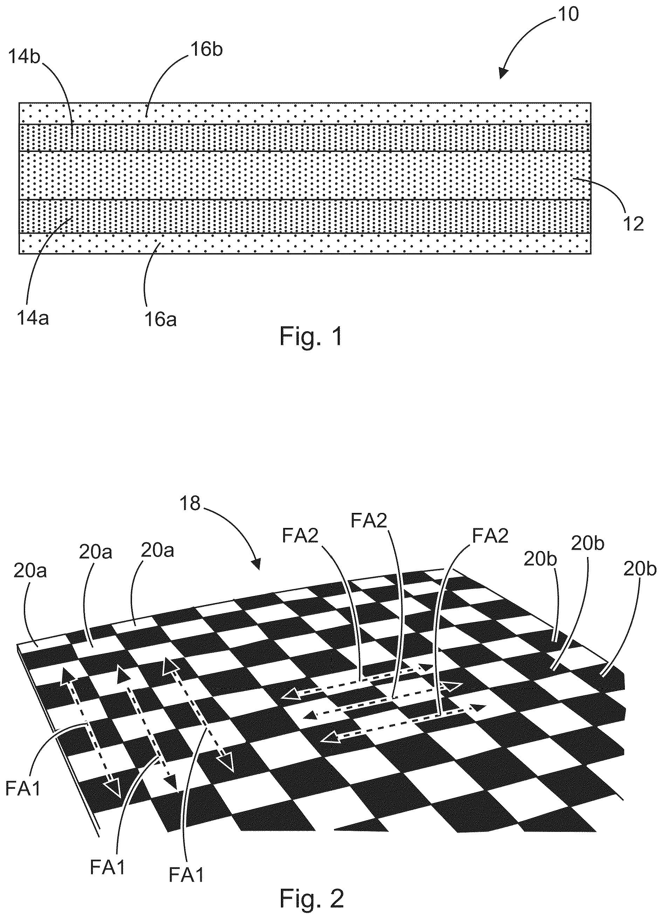

Die Fig. 1 zeigt eine Kunststoffverbundplatte 10 mit einem mehrschichtigen Aufbau. Die Kunststoffverbundplatte 10 ist eine Fahrwegplatte, welche für den Bodenschutz zum Verhindern von gewichtsbelastungsbedingten Bodenschäden eingesetzt werden kann.

Die Kunststoffverbundplatte 10 umfasst eine Kunststoffkernschicht 12, eine unterseitige Faserverbundschicht 14a, eine oberseitige Faserverbundschicht 14b, eine unterseitige Kunststoffschutzschicht 16a und eine oberseitige Kunststoffschutzschicht 16b. Die unterseitige Faserverbundschicht 14a ist unterhalb der Kunststoffkernschicht 12 angeordnet. Die unterseitige Kunststoffschutzschicht 16a ist unterhalb der unterseitigen Faserverbundschicht 14a angeordnet. Die oberseitige Faserverbundschicht 14b ist oberhalb der Kunststoffkernschicht 12 angeordnet. Die oberseitige Kunststoffschutzschicht 16b ist oberhalb der oberseitigen Faserverbundschicht 14b angeordnet.

Die Kunststoffkernschicht 12 weist eine größere Schichtstärke als die unterseitige Kunststoffschutzschicht 16a und die oberseitige Kunststoffschutzschicht 16b auf. Die Kunststoffkernschicht 12 weist eine Schichtstärke in einem Bereich zwischen 5 und 50 mm auf. Die unterseitige Kunststoffschutzschicht 16a und die oberseitige Kunststoffschutzschicht 16b weisen eine Schichtstärke von mehr als 2 mm auf. Die Kunststoffkernschicht 12, die unterseitige Kunststoffschutzschicht 16a und die oberseitige Kunststoffschutzschicht 16b sind als Thermoplaste ausgebildet und stellen mahlgutbasierte Kunststoffschmelzschichten dar.

Die unterseitige Faserverbundschicht 14a und die oberseitige Faserverbundschicht 14b können eine oder mehrere Textillagen 18, 18a, 18b umfassen.

Die Fig. 2 zeigt beispielhaft eine solche Textillage 18. Die dargestellte Textillage 18 ist eine Gewebelage aus mehreren miteinander verwebten faserverstärkten Bändern 20a, 20b. Die Verstärkungsfasern der faserverstärkten Bänder 20a, 20b weisen jeweils eine unidirektionale Faserausrichtung FA1, FA2 auf. Das durch die faserverstärkten Bänder 20a, 20b gebildete Bandgewebe weist eine erste Gruppe von Bändern 20a und eine zweite Gruppe von Bändern 20b auf. Die Verstärkungsfasern der ersten Gruppe von Bändern erstrecken sich in eine erste Richtung FA1. Die Verstärkungsfasern der zweiten Gruppe von Bändern 20b erstrecken sich in eine zweite Richtung FA2. Die erste und die zweite Richtung FA1, FA2, verlaufen rechtwinklig zueinander.

Die Fasern der Bänder 22a, 22b sind Glasfasern, sodass das Bandgewebe ein Glasfasertape-Gewebe ist.

Die Textillage 18 kann alternativ eine Gewirkelage aus Kettfäden, Schussfäden und Bindefäden sein.

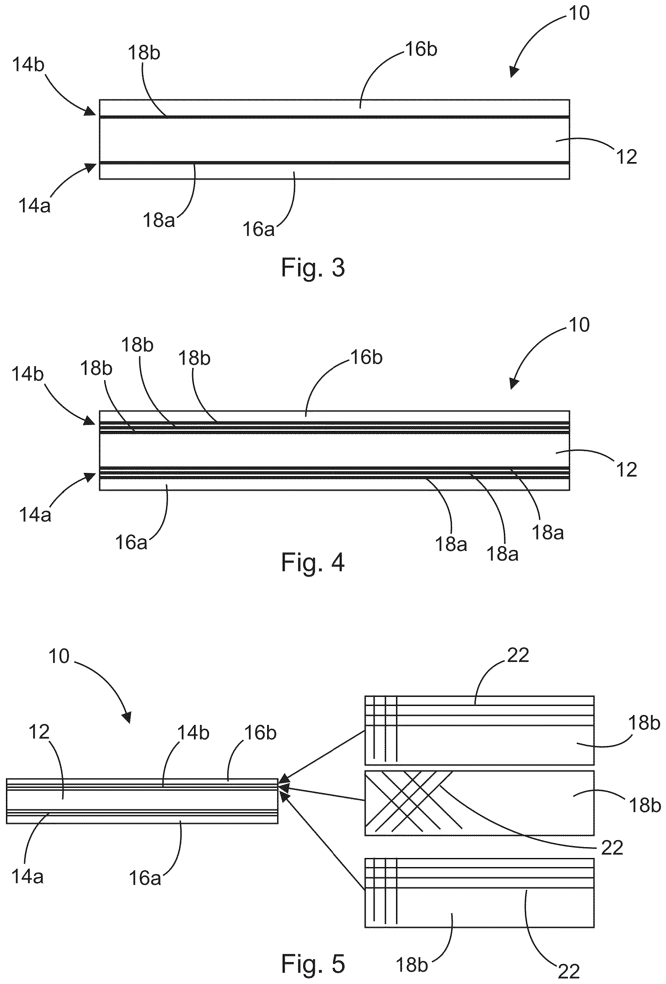

Die Fig. 3 zeigt eine Kunststoffverbundplatte 10, bei welcher die Faserverbundschichten 14a, 14b jeweils nur eine Textillage 18a, 18b aufweisen. Die Fasern der Textillagen 18a, 18b können mineralische Fasern, Kunstfasern oder Karbonfasern sein. Die Textillagen 18a, 18b können Gewebelagen, Gelegelagen, Gewirklagen, Gitterlagen oder Fadenscharlagen sein. Der Lagenaufbau unterhalb und oberhalb der Kunststoffkernschicht 12 ist symmetrisch.

Die Fig. 4 zeigt eine Kunststoffverbundplatte 10, bei welcher die Faserverbundschichten 14a, 14b jeweils drei Textillagen 18a, 18b aufweisen. Die Textillagen 18a, 18b können typgleiche oder unterschiedliche Textillagen sein. Die Textillagen 18a der Faserverbundschicht 14a liegen unmittelbar übereinander. Die Textillagen 18b der Faserverbundschicht 14b liegen unmittelbar übereinander.

Die Fig. 5 zeigt, dass die Textillagen 18b der Faserverbundschicht 14b voneinander abweichende Faserorientierungen aufweisen können. Die Orientierung der Fasern 22 von benachbarten Textillagen 18b unterscheidet sich um jeweils 45°.

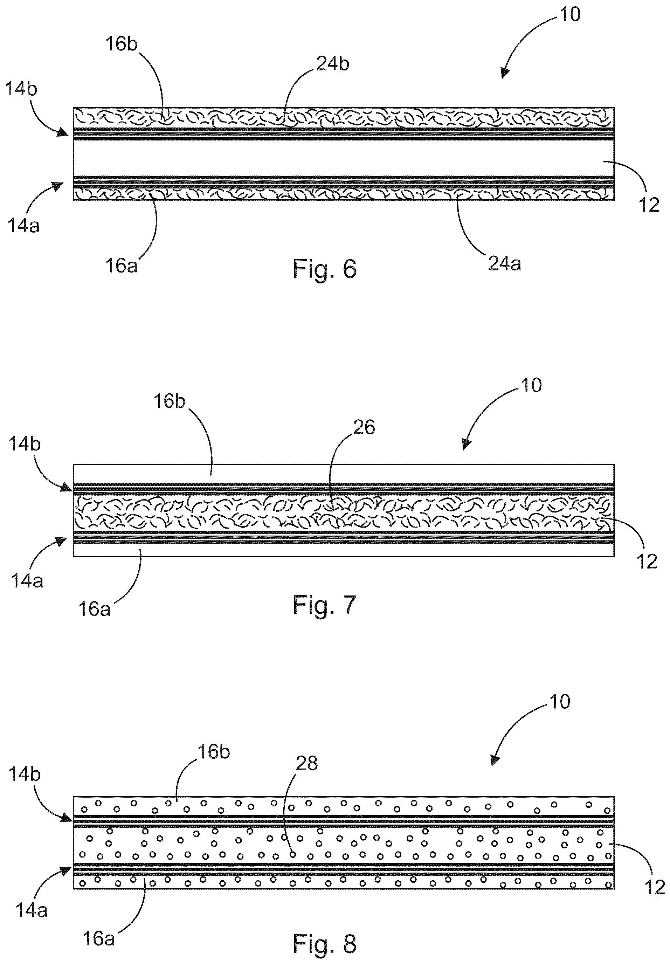

Die Fig. 6 zeigt eine Kunststoffverbundplatte 10, bei welcher in die unterseitige Kunststoffschutzschicht 16a und die oberseitige Kunststoffschutzschicht 16b Fasern 24a, 24b eingebettet sind. Die in die Unterseitige Kunststoffschutzschicht 16a eingebetteten Fasern 24a und die in die oberseitige Kunststoffschutzschicht 16b eingebetteten Fasern 24b sind eingestreute Einzelfasern. Die eingebetteten Fasern 24a, 24b können durch ein vorgemischtes Kunststoff-Faser-Gemisch während des Herstellungsprozesses der Kunststoffverbundplatte 10 eingebracht werden. Alternativ können die eingebetteten Fasern 24a, 24b durch eine gesonderte Fasereinstreuung bei der Herstellung der Kunststoffverbundplatte 10 eingebracht werden. Die in die unterseitige Kunststoffschutzschicht 16a und die oberseitige Kunststoffschutzschicht 16b eingebetteten Fasern 24a, 24b können mineralische Fasern, Kunstfasern, Carbonfasern oder Naturfasern sein.

Die Fig. 7 zeigt eine Kunststoffverbundplatte 10, bei welcher in die Kunststoffkernschicht 12 Fasern 26 eingebettet sind. Die in die Kunststoffkernschicht 12 eingebetteten Fasern 26 sind eingestreute Einzelfasern. Die in die Kunststoffkernschicht 12 eingebetteten Fasern 26 können mineralische Fasern, Kunstfasern, Carbonfasern oder Naturfasern sein.

Die Fig. 8 zeigt eine Kunststoffverbundplatte, bei welcher in die Kunststoffkernschicht 12 und die unterseitige Kunststoffschutzschicht 16a und die oberseitige Kunststoffschutzschicht 16b ein Füllstoff 28 eingebracht ist. Der Füllstoff 28 kann ein mineralischer Füllstoff, wie beispielsweise Calciumcarbonat, Sand, Aluminiumhydroxid oder Glasfaserkugeln, sein. Alternativ kann der Füllstoff 28 auch ein polymerer oder natürlicher beziehungsweise organischer Füllstoff sein.

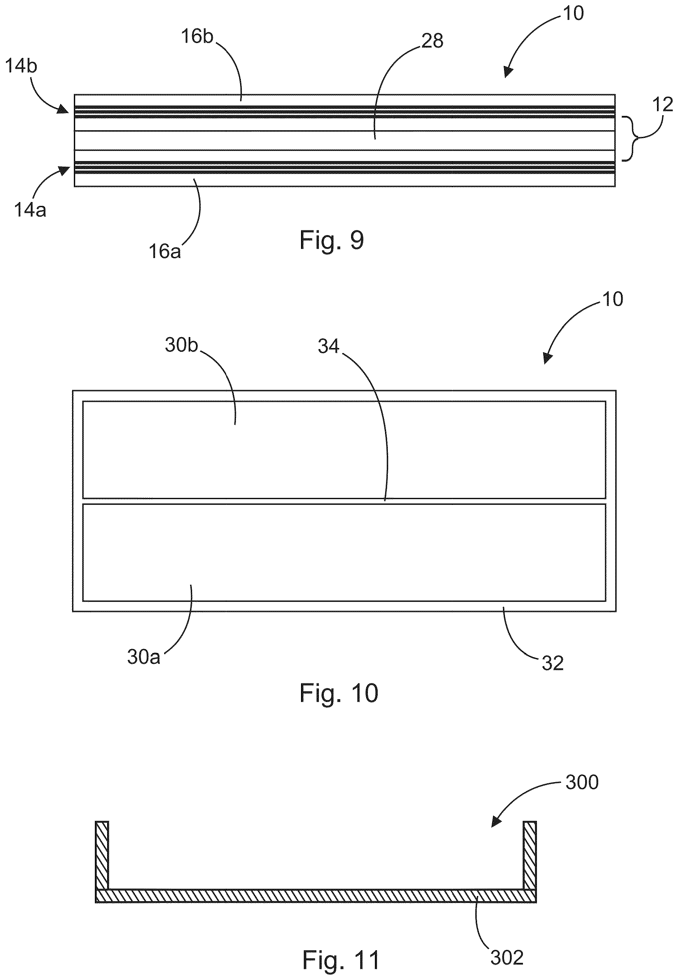

Bei dem in der Fig. 9 dargestellten Ausführungsbeispiel ist lediglich in die Kunststoffkernschicht 12 ein Füllstoff 28 eingebracht. Der Füllstoff 28 ist in diesem Fall bereits verfestigt und kann beispielsweise ein verfestigter Vliesstoff sein. Der verfestigte Füllstoff 28 kann beispielsweise ein thermisch und/oder mechanisch und/oder chemisch verfestigter Vliesstoff sein. Alternativ kann der Füllstoff 28 auch ein Gewebe, Gelege, Gewirke oder ein Gitter sein.

Die Fig. 10 zeigt eine Kunststoffverbundplatte 10, bei welcher die Faserverbundschichten 14a, 14b mehrere, vorliegend zwei, in der gleichen Ebene nebeneinander liegende Faserverbundstreifen 30a, 30b aufweisen. Im Randbereich der Kunststoffverbundplatte 10 befindet sich ein außenseitiger, faserfreier Materialstreifen 32. Zwischen den Faserverbundstreifen 30a, 30b befindet sich ein faserfreier Materialstreifen 34, welcher entlang eines vom Plattenrand entfernten Bereichs der Kunststoffverbundplatte 10 verläuft.

Der außenseitige freie Materialstreifen 32 kann eine Breite im Bereich von 5 bis 200 mm aufweisen. Durch den außenseitigen faserfreien Materialstreifen 32 treten im Randbereich keine Fasern aus der Kunststoffverbundplatte 10 aus. Außerdem lässt sich der außenseitige freie Materialstreifen spanend bearbeiten, sodass im Randbereich beispielsweise eine spanend eingebrachte Fase vorhanden sein kann.

Durch den vom Plattenrand entfernt angeordneten faserfreien Materialstreifen 34 ist die Faserstruktur der Faserverbundschichten 14a, 14b plattenintern unterbrochen. Durch den vom Plattenrand entfernt angeordneten faserfreien Materialstreifen 34 wird eine gezielte Verformbarkeit der Kunststoffverbundplatte 10 und so eine höhere Plattenflexibilität erreicht.

Die Fig. 11 bis 21 zeigen die Herstellung einer Kunststoffverbundplatte 10 mittels einer Sinterpresse 300.

Wie in der Fig. 11 dargestellt, weist die Sinterpresse 300 einen Werkstückträger 302 auf, welcher zur Aufnahme des Plattenmaterials dient.

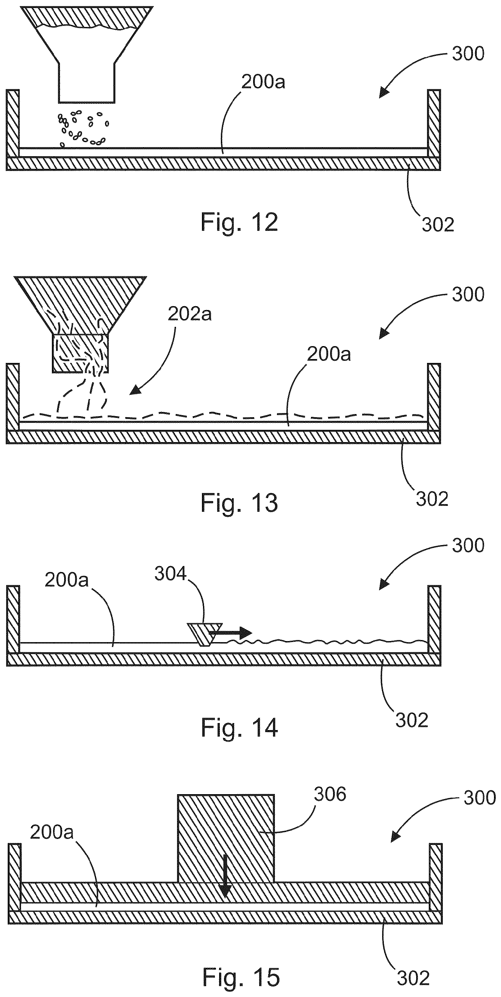

Wie in der Fig. 12 dargestellt, wird zunächst Kunststoffmaterial 200a für eine unterseitige Kunststoffschutzschicht 16a in den Werkstückträger 302 eingebracht. Das Kunststoffmaterial 200a kann Kunststoff-Mahlgut oder Kunststoff-Schnittgut sein, beispielsweise in Form von Pulver, Flocken, Flakes oder anderen Formen.

Wie in der Fig. 13 dargestellt, kann optional Fasermaterial 202a auf und in das Kunststoffmaterial 200a eingebracht werden.

Die Fig. 14 zeigt, dass das eingebrachte Kunststoffmaterial 200a dann mittels eines Rakels 304 gleichmäßig in dem Werkstückträger 302 verteilt wird. Wenn, wie in der Fig. 13 dargestellt, ergänzendes Fasermaterial 202a in den Werkstückträger 302 eingebracht wurde, wird mittels des Rakels 304 die Kunststoff-Fasermaterial-Mischung vergleichmäßigt.

Die Fig. 15 zeigt, dass nach dem Vergleichmäßigen ein Druckstempel 306 zur Komprimierung und Verfestigung der Kunststoffmaterialschicht 200a eingesetzt werden kann. Eine Einzelschichtkomprimierung ist je nach beabsichtigten Platteneigenschaften jedoch nicht zwingend erforderlich.

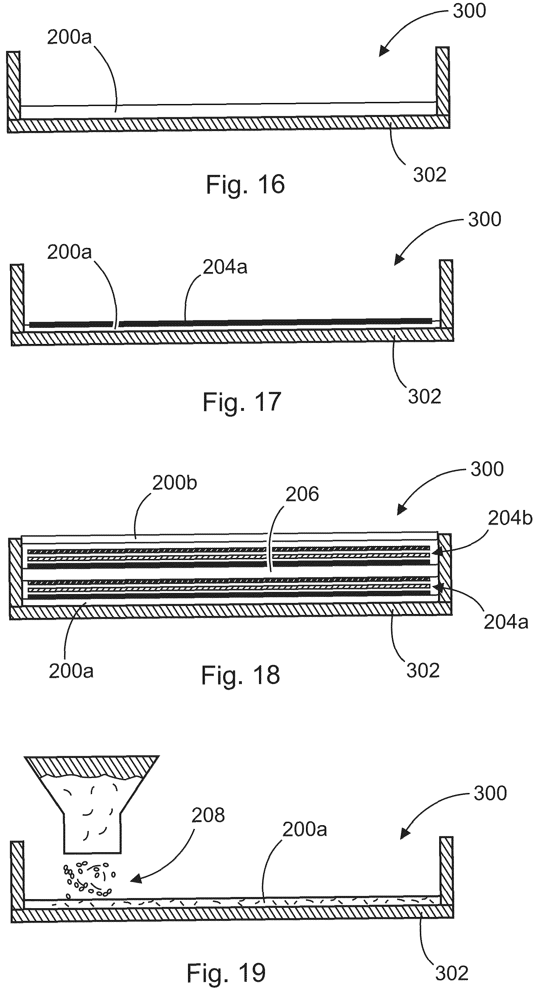

Die Fig. 16 zeigt die vergleichmäßigte und komprimierte Schicht aus Kunststoffmaterial 200a.

Wie in der Fig. 17 dargestellt, kann dann Fasermaterial 204a für die unterseitige Faserverbundschicht 14a in den Werkstückträger 302 eingesetzt werden. Das Fasermaterial 204a kann eine Textillage sein, beispielsweise ein Gewebe, ein Gewirke oder ein Vliesstoff.

Die Fasermaterial- und Kunststoffeinbringung wird nachfolgend je nach beabsichtigter Plattenkonfiguration wiederholt.

Die Fig. 18 zeigt einen Verfahrenszustand, bei welchem Kunststoffmaterial 200a für die unterseitige Kunststoffschutzschicht 16a, Fasermaterial 204a für die unterseitige Faserverbundschicht 14a, Kunststoffmaterial 206 für die Kunststoffkernschicht 12, Fasermaterial 204b für die oberseitige Faserverbundschicht 14b und Kunststoffmaterial 200b für die oberseitige Kunststoffschutzschicht 16b in den Werkstückträger 302 eingebracht wurde. Nach dem Verpressen des Kunststoffmaterials 200a, 200b, 206 und des Fasermaterials 204a, 204b wird das Kunststoffmaterial durch Hinzufügen von Wärme aufgeschmolzen. Nach dem Aufheizen wird die gewünschte Temperatur für eine vorgegebene Prozessdauer gehalten, bevor die Kunststoffverbundplatte 10 abkühlen und aus dem Werkstückträger 302 entnommen werden kann.

Die Fig. 19 zeigt, dass das Kunststoffmaterial 200a für die Kunststoffschutzschicht 16a bereits in Form eines Kunststoff-Faser-Gemisches 208 in den Werkstückträger 302 eingebracht werden kann.

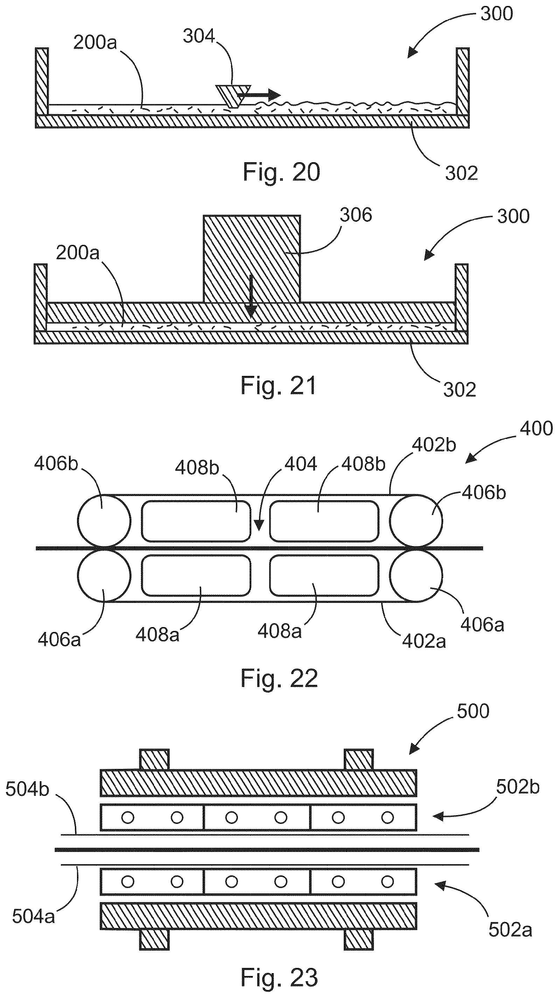

Wie in den Fig. 20 und 21 dargestellt, wird in diesem Fall das Kunststoff-Faser-Gemisch 208 mittels eines Rakels 304 vergleichmäßigt und mittels eines Druckstempels 306 komprimiert.

Die Fig. 22 zeigt eine Doppelbandpresse 400 zum Herstellen einer Kunststoffverbundplatte 10. Die Doppelbandpresse 400 umfasst zwei umlaufende Pressbänder 402a, 402b, wobei sich zwischen den Pressbändern 402a, 402b ein Transportspalt 404 befindet. Das Pressband 402a wird von den Umlenkrollen 406a geführt. Das Pressband 402b wird von den Umlenkrollen 406b geführt. Zwischen den Pressbändern 402a, 402b befindet sich eine Reaktionszone, in welcher ein vorgelegter Plattenrohling mit Druck beaufschlagt und mit Wärme behandelt wird. Die Doppelbandpresse 400 ist hierzu mit einer oder mehreren Druckeinrichtungen und oder Temperatureinrichtungen 408a, 408b ausgestattet, die über die Pressbänder 402a, 402b eine Presskraft auf den Plattenrohling ausüben können.

Der Plattenrohling wird zunächst zwischen den Pressbändern 402a, 402b positioniert 402a, 402b. Sobald die Pressbänder 402a, 402b schließen, wird Druck auf den Plattenrohling ausgeübt, während gleichzeitig Wärme zugeführt wird. Das Kunststoffmaterial des Plattenrohlings wird in der Reaktionszone durch Erhitzen erweicht. Die Druckerhöhung erfolgt fortlaufend an der Eintrittsöffnung der Bandpresse 400, um Luft und Gaseinschlüsse aus dem Plattenrohling zu entfernen, sodass Lufteinschlüsse zwischen den Schichten vermieden werden. Durch die Erweichung bis zum Schmelzen des Kunststoffes verbinden sich die Lagen und etwaige Zusatzstoffe miteinander. Durch das Entweichen von Luft und Gasen und die Formgebung der Pressmodule entsteht eine massive, gleichmäßige weiche Masse. In einer Ausführungsform kann im hinteren Teil der Doppelbandpresse eine aktive Kühlung vorgesehen sein. Die Kühlung kann über eine aktive Temperiereinrichtung, beispielsweise eine aktive Kühleinrichtung, erfolgen. Der Plattenrohling wird während des Herstellungsprozesses folglich durch eine Heizzone und eine Kühlzone bewegt. Über die Kühlung wird die Temperatur stufenweise herabgesetzt, sodass Spannungen im Material reduziert werden. Die verhindert ein unbeabsichtigtes spannungsbedingtes Verbiegen der Kunststoffverbundplatten 10.Der Kunststoffverbund wird kontinuierlich aus der Doppelbandpresse 400 gefördert und anschließend in einer Schneideinheit zu Kunststoffverbundplatten 10 zugeschnitten. Während oder nach dem Plattenpressvorgang kann eine Modifikation der Plattenoberfläche erfolgen.

Die Fig. 23 zeigt eine weitere Presse 500, mittels welcher erfindungsgemäße Kunststoffverbundplatten 10 herstellbar sind. Die Presse 500 weist Gleitplatten 502a, 502b auf, an welchen Gleitbänder 504a, 504b zum Bewegen des Plattenrohlings entlanggeführt werden. Die Reaktionszone befindet sich zwischen den Gleitbändern 504a, 504b.

### Bezugszeichen

- 10: Kunststoffverbundplatte
- 12: Kunststoffkernschicht
- 14a, 14b: Faserverbundschichten
- 16a, 16b: Kunststoffschutzschichten
- 18, 18a, 18b: Textillagen
- 20a, 20b: Bänder
- 22: Fasern
- 24a, 24b: Fasern
- 26: Fasern
- 28: Füllstoff
- 30a, 30b: Faserverbundstreifen
- 32: faserfreier Materialstreifen
- 34: faserfreier Materialstreifen

- 200a, 200b: Kunststoffmaterial
- 202a: Fasermaterial
- 204a, 204b: Fasermaterial
- 206: Kunststoffmaterial
- 208: Kunststoff-Faser-Gemisch

- 300: Sinterpresse
- 302: Werkstückträger
- 304: Rakel
- 306: Druckstempel

- 400: Bandpresse
- 402a, 402b: Pressbänder
- 404: Transportspalt
- 406a, 406b: Umlenkrollen
- 408a, 408b: Druckeinrichtung

- 500: Presse
- 502a, 502b: Druckplatten
- 504a, 504b: Gleitbänder

- FA1, FA2: Faserausrichtungen

## Patentansprüche

1. Kunststoffverbundplatte (10) für den Bodenschutz zum Verhindern von gewichtsbelastungsbedingten Bodenschäden, mit
- einer Kunststoffkernschicht (12);
- zumindest einer oberseitigen Faserverbundschicht (14b), welche oberhalb der Kunststoffkernschicht (12) angeordnet ist,
- zumindest einer oberseitigen Kunststoffschutzschicht (16b), welche oberhalb der oberseitigen Faserverbundschicht (14b) angeordnet ist,
- zumindest einer unterseitigen Faserverbundschicht (14a), welche unterhalb der Kunststoffkernschicht (12) angeordnet ist, und
- zumindest einer unterseitigen Kunststoffschutzschicht (16a), welche unterhalb der unterseitigen Faserverbundschicht (14a) angeordnet ist.

2. Kunststoffverbundplatte (10) nach Anspruch 1,
**dadurch gekennzeichnet, dass** die Kunststoffkernschicht (12) eine größere Schichtstärke als die oberseitige Kunststoffschutzschicht (16b) und/oder die unterseitige Kunststoffschutzschicht (16a) aufweist.

3. Kunststoffverbundplatte (10) nach Anspruch 1 oder 2,
**dadurch gekennzeichnet, dass** die Kunststoffkernschicht (12) und/oder die zumindest eine oberseitige Kunststoffschutzschicht (16b) und/oder die zumindest eine unterseitige Kunststoffschutzschicht (16a) ein oder mehrere Virgin-Kunststoffe und/oder einen oder mehrere Rezyklat-Kunststoffe umfasst.

4. Kunststoffverbundplatte (10) nach einem der vorstehenden Ansprüche,
**dadurch gekennzeichnet, dass** die Kunststoffkernschicht (12) und/oder die zumindest eine oberseitige Kunststoffschutzschicht (16b) und/oder die zumindest eine unterseitige Kunststoffschutzschicht (16a) aus einem Thermoplast ausgebildet ist.

5. Kunststoffverbundplatte (10) nach einem der vorstehenden Ansprüche, **dadurch gekennzeichnet, dass** die Kunststoffkernschicht (12) und/oder die zumindest eine oberseitige Kunststoffschutzschicht (16b) und/oder die zumindest eine unterseitige Kunststoffschutzschicht (16a) als
- eine mahlgutbasierte und/oder schnittgutbasierte Kunststoffschmelzschicht ausgebildet ist, und/oder
- eine agglomeratbasierte Kunststoffschmelzschicht ausgebildet ist, und/oder
- eine granulatbasierte Kunststoffschmelzschicht ausgebildet ist.

6. Kunststoffverbundplatte (10) nach einem der vorstehenden Ansprüche, **dadurch gekennzeichnet, dass** in die Kunststoffkernschicht (12) und/oder in die zumindest eine oberseitige Kunststoffschutzschicht (16b) und/oder in die zumindest eine unterseitige Kunststoffschutzschicht (16a) Fasern (24a, 24b, 26) eingebettet sind.

7. Kunststoffverbundplatte (10) nach Anspruch 6,
**dadurch gekennzeichnet, dass** die in die Kunststoffkernschicht (12) eingebetteten Fasern (26) und/oder in die zumindest eine oberseitige Kunststoffschutzschicht (16b) eingebetteten Fasern (24b) und/oder die in die zumindest eine unterseitige Kunststoffschutzschicht (16a) eingebetteten Fasern (24a) Einzelfasern, insbesondere eingestreute Einzelfasern, sind oder eine Fasermatte bilden.

8. Kunststoffverbundplatte (10) nach 6 oder 7,
**dadurch gekennzeichnet, dass** die in die Kunststoffkernschicht (12) eingebetteten Fasern (26) und/oder die in die zumindest eine oberseitige Kunststoffschutzschicht (16b) eingebetteten Fasern (24b) und/oder die in die zumindest eine unterseitige Kunststoffschutzschicht (16a) eingebetteten Fasern (24a)
- mineralische Fasern; und/oder
- Kunstfasern; und/oder
- Karbonfasern; und/oder
- Naturfasern
umfassen.

9. Kunststoffverbundplatte (10) nach einem der vorstehenden Ansprüche, **dadurch gekennzeichnet, dass** die zumindest eine oberseitige Faserverbundschicht (14b) und/oder die zumindest eine unterseitige Faserverbundschicht (14a) nur eine oder mehrere Textillagen (18, 18a, 18b) umfassen.

10. Kunststoffverbundplatte (10) nach einem der vorstehenden Ansprüche, **dadurch gekennzeichnet, dass** die zumindest eine oberseitige Faserverbundschicht (14b) und/oder die zumindest eine unterseitige Faserverbundschicht (14a)
- mineralische Fasern (22); und/oder
- Kunstfasern; und/oder
- Karbonfasern
umfasst.

11. Kunststoffverbundplatte (10) nach einem der vorstehenden Ansprüche, **dadurch gekennzeichnet, dass** die zumindest eine oberseitige Faserverbundschicht (14b) und/oder die zumindest eine unterseitige Faserverbundschicht (14a) Fasern (22) aufweisen, welche als Schar vorliegen oder einen textilen Flächenverbund bilden.

12. Kunststoffverbundplatte (10) nach einem der vorstehenden Ansprüche, **dadurch gekennzeichnet, dass** die zumindest eine oberseitige Faserverbundschicht (14b) und/oder die zumindest eine unterseitige Faserverbundschicht (14a) unidirektional und oder multidirektional orientierte Fasern (22) aufweisen.

13. Kunststoffverbundplatte (10) nach einem der vorstehenden Ansprüche, **dadurch gekennzeichnet, dass** die zumindest eine oberseitige Faserverbundschicht (14b) und/oder die zumindest eine unterseitige Faserverbundschicht (14a) imprägnierte Fasern umfassen.

14. Kunststoffverbundplatte (10) nach einem der vorstehenden Ansprüche, **dadurch gekennzeichnet, dass** die zumindest eine oberseitige Faserverbundschicht (14b) und/oder die zumindest eine unterseitige Faserverbundschicht (14a) eine oder mehrere Gewebelagen und/oder eine oder mehrere Gewirkelagen umfassen.

15. Kunststoffverbundplatte (10) nach einem der vorstehenden Ansprüche, **dadurch gekennzeichnet, dass** die zumindest eine oberseitige Faserverbundschicht (14b) und/oder die zumindest eine unterseitige Faserverbundschicht (14a) ein oder mehrere faserverstärkte Bänder (20a, 20b) aufweisen.

16. Kunststoffverbundplatte (10) nach Anspruch 15,
**dadurch gekennzeichnet, dass** die Verstärkungsfasern (22) der faserverstärkten Bänder (20a, 20b) eine unidirektionale Faserausrichtung (FA1, FA2) aufweisen.

17. Kunststoffverbundplatte (10) nach Anspruch 15 oder 16,
**dadurch gekennzeichnet, dass** die faserverstärkten Bänder (20a, 20b) der zumindest einen oberseitigen Faserverbundschicht (14b) und/oder der zumindest einen unterseitigen Faserverbundschicht (14a) ein Bandgewebe bilden.

18. Kunststoffverbundplatte (10) nach einem der vorstehenden Ansprüche, **dadurch gekennzeichnet, dass** sich im Randbereich der Kunststoffverbundplatte (10) ein außenseitiger faserfreier Materialstreifen (32) befindet.

19. Plattenanordnung, mit
- mehreren miteinander verbindbaren Kunststoffverbundplatten (10); **dadurch gekennzeichnet, dass** die Kunststoffverbundplatten (10) nach einem der vorstehenden Ansprüche ausgebildet ist.

20. Plattenanordnung nach Anspruch 19,
**dadurch gekennzeichnet, dass** die mehreren Kunststoffverbundplatten (10) durch Stecken oder durch eine Schraubverbindungen miteinander verbindbar sind und ein Stecksystem oder ein verschraubtes System bilden.

21. Verfahren zum Herstellen einer Kunststoffverbundplatte (10) nach einer der Anspruche 1 bis 18,
**dadurch gekennzeichnet, dass** das Herstellen der Kunststoffverbundplatte (10) in einem Pressverfahren oder in einem Extrusionsverfahren erfolgt.

22. Verfahren nach Anspruch 21,
**dadurch gekennzeichnet, dass** in dem Pressverfahren eine Sinterpresse (300) oder eine Bandpresse eingesetzt wird.

23. Verfahren nach Anspruch 22,
**dadurch gekennzeichnet, dass** bei Verwendung einer Sinterpresse (300) ein oder mehrere der folgenden Schritte ausgeführt werden:
- Einbringen von Kunststoffmaterial (200a) für die zumindest eine unterseitige Kunststoffschutzschicht (16a) in einen Werkstückträger (302);
- Einbringen von Fasermaterial (204a) für die zumindest eine unterseitige Faserverbundschicht (14a) in den Werkstückträger (302);
- Einbringen von Kunststoffmaterial (206) für die Kunststoffkernschicht (12) in den Werkstückträger (302);
- Einbringen von Fasermaterial (204b) für die zumindest eine oberseitige Faserverbundschicht (14b) in den Werkstückträger (302);
- Einbringen von Kunststoffmaterial (200b) für die zumindest eine oberseitige Kunststoffschutzschicht (16b) in den Werkstückträger (302);
- Verpressen des eingebrachten Kunststoffmaterials (200a, 200b, 206) und/oder des eingebrachten Fasermaterials (204a, 204b) mittels eines Druckstempels (306);
- Erwärmen des verpressten Kunststoffmaterials (200a, 200b, 206), insbesondere zum Aufschmelzen des Kunststoffmaterials (200a, 200b, 206).

24. Verfahren nach Anspruch 22,
**dadurch gekennzeichnet, dass** bei Verwendung einer Bandpresse (400) ein oder mehrere der folgenden Schritte ausgeführt werden:
- Positionieren eines Kunststoffmaterial (200a, 200b, 206) und Fasermaterial (204a, 204b) umfassenden Plattenrohlings zwischen Pressbändern (402a, 402b) der Bandpresse (400);
- Verpressen des Plattenrohlings zwischen den Pressbändern (402a, 402b) der Bandpresse (400);
- Erwärmen des Plattenrohlings zwischen den Pressbändern (402a, 402b) der Bandpresse (400), insbesondere zum Aufschmelzen des Kunststoffmaterials (200a, 200b, 206);
- kontrolliertes Abkühlen des Plattenrohlings, insbesondere zwischen den Pressbändern (402a, 402b) der Bandpresse (400), nach dem Aufschmelzen des Kunststoffmaterials (200a, 200b, 206).
